# EUROPEAN PATENT SPECIFICATION

(11) **EP 0 875 364 B1**
(45) Date of publication and mention of the grant of the patent: **20.08.2003**
(21) Application number: 98107809.0
(22) Date of filing: 29.04.1998
(51) Int. Cl.: B29D 30/00, G06F 17/60

(54) **Method and plant for producing a plurality of different tyres**
Verfahren und Anlage zur Herstellung einer Vielzahl unterschiedlicher Reifen
Procédé et installation pour la production d'une pluralité de pneus différents

(30) Priority: 30.04.1997 EP 97107239
(43) Date of publication of application: 04.11.1998
(73) Proprietor: PIRELLI PNEUMATICI Società per Azioni, 20126 Milano (IT)
(72) Inventor: Caretta, Renato, 21013 Gallarate (VA) (IT)
(74) Representative: Giannesi, Pier Giovanni

(56) References cited:
- EP-A- 0 448 407
- US-A- 4 773 810
- LINGARAJ B. P. ; WOLFE H.: "OPTIMAL DESIGN OF A TYRE PLANT" OPSEARCH SEPT.-DEC. 1976, vol. 13, no. 3-4, 1976, pages 182-197, XP002041803 INDIA
- FUMERO F. , VERCELLIS C.: "cAPACITY MANAGEMENT THROUGH LAGRANGEAN RELAXATION: AN APPLIC. TO TYRES PRODUCTION" PRODUCTION PLANNING & CONTROL , NOV.-DEC. 1996, TAYLOR & FRANCIS, vol. 7, no. 6, 1996, pages 604-614, XP002041804 UK
- BONHAM D.J., NEWCOMBE W.R., KARDOS G.: "A COMPUTERZED RESOURCE ALLOCATION SYSTEM" CONFERENCE: ' COMPONTROL 70' - SCI. SOC. MECH. ENGRS,July 1970 (1970-07), pages 185-200, XP002041805 MISKOLC - HUNGARY
- CHANG C. L.: "HEURISTIC SCHEDULING IN A DYNAMIC PRODUCTION ENVIRONMENT: A PRACTICAL CASE" 8TH INTERNAT. CONFERENCE OF IND. & ENGIN. APPLICATIONS OF ARTIFICIAL INTELLIGENCE & EXPERT SYSTEMS,1995, pages 711-719, XP002041806 MELBOURNE - AUSTRALIA
- FRANCIS N.D., NEELAMKAVIL J. D.: "COMPUTER AIDED PRODUCTION PLANNING IN A TYRE FACTORY" ECONOMIC COMPUTATION & ECON. CYBERNETICS STUDIES & RESEARCH,1980, pages 91-103, XP002041807 ROMANIA

## Description

The present invention refers to the production of tires, referring in particular to a method of production of a plurality of tires and to a related system for their production.

A tire for vehicle wheels is known to be constituted of an internally hollow torus-shaped structure formed of a plurality of components, and primarily of a textile or metal carcass exhibiting two beads, each bead defined along a circumferential radially inner border of the carcass and intended for anchoring the tire to a corresponding mounting rim. It is additionally comprised of at least one pair of annular circumferentially inextensible reinforcement rings, called cores, introduced into said beads, at least one core per bead.

Such carcass is composed of a support structure comprising at least one ply of rubberized fabric, reinforced with thin textile or metal cords, running along axially from one bead to the other, which presents the actual borders of each one turned back radially toward the exterior around the corresponding core.

In tires of the aforementioned radial type the thin cords as described are arranged substantially in layers encompassing the axis of rotation of the tire. In the crown of such a carcass are arranged an annular superstructure, called a belt or breaker, normally composed of one or more layers of rubberized fabric, wrapped in an arrangement of overlapping reciprocal superimposition to define a so-called "belt assembly," and a tread band of elastomer material, wound around the belt assembly, printed with a design in relief and intended for rolling contact of the tire on the road. In addition, two sides are arranged on the carcass, in axially opposite lateral arrangements, and they are of elastomer material, each extending radially toward the exterior from the external border of the relevant bead.

According to the kind of carcass structure intended for the tire, the terminal margins of such sides are applied on the plies of the carcass in such a manner as to be enclosed between these plies and the opposing lateral borders of the tread band (arrangement called "bottom-sidewalls") or else are applied directly superimposed on the opposing lateral borders of the tread band itself (arrangement called "top-sidewalls").

In "tubeless" tires, air chambers are not used, and the internal surface of the carcass is covered with a "liner", in other words one or more strata (layers) of air-impermeable elastomer material. Finally, the carcass can be made up of other elements, that is, borders, pads and filling, according to the specific intended use of the tire.

As it is known, in the making of tires of the cited type, the procedure generally includes four phases : a) preparation of the mixtures or compounds, b) realization of the separate components, or semimanufactured articles, c) assembly in succession of several components to obtain a raw carcass, d) vulcanization of the carcass with simultaneous molding of the design on the tread band.

For such a purpose, it must be pointed out that a tire presents a plurality of chemical-physical, structural, dimensional and of appearance features , and the entirety of these features characterizes one particular model of tire. Chemical-physical features are those being brought together to define the type and the composition of materials, for example the proportional formulas of the various compounds being used. Structural features are those which define the number and type of components, and their reciprocal positioning in the structure of the carcass. The dimensional features refer to the geometric measurements and to the linear profile of the tire on the cross-section (external diameter, chord or maximum width,
height of the sides, and their relationship, that is, the cross-section ratio) and are those references which hereinafter are simply indicated as "size." The characteristics of the appearance are constituted of the tread design, the ornamental motif and the various words or distinctive symbols reproduced on the sidewalls of the tire, and in the following description are indicated as "tread design." Variations of the chemical-physical features impact on the procedures and on the machinery used for preparation of the compounds. Variations of the structure impact on the selection of materials for reinforcement, on the type, number and dimensions and positioning of the semimanufactured articles and involve processes, machinery and devices the manufacturing process, while variations of the features of dimensions and appearance always require changing of the vulcanization molds.

It is important to show how the production of a plurality of different tires makes up a set of costs which become progressively higher as the number and variety of models of tires to be produced increases : in particular, it is necessary to intervene in the processes and/or on the production systems of the compounds to allow the production of components with new and different chemical-physical features, and in the systems of production of semimanufactured articles to change the sizes. Then the requirement arises for change of the operational sequence (different methodology of assembly) and/or of the devices and of the regulation of the machinery for manufacture any time the structure and/or the size of the tire to be manufactured is changed. Finally, it is necessary to supply and arrange and position at least one vulcanization mold for each different couple of "tread design -tire size."

All this raises further costs sustained by purchase of molds of various sizes and with various tread designs, and of different devices, costs for lack of saturation of the same, losses of productivity by down machinery (a change of process or of the devices generally involves a down machinery), and discarding of materials. For example, in the case of continuous production of components, as a result of the stopping of the machine of the systems downstream in the process and/or the change of features of the components, excess production is generated which often must be discarded, given that it cannot be reused.

Because of the aforementioned drawbacks, it is clear that production of a great variety of tire models on the same line of production is generally not to be recommended by expert in the art, who must pursue the objective of minimizing costs; as aforementioned, such an objective is incompatible with frequent changing of the devices and modification of the processes for production.

In fact, when the volumes of sale of any single model are sufficiently high, actually doubling the production systems, it is possible to produce a different model in continuum on each system, thus minimizing the aforementioned drawbacks.

Nevertheless, even when the volumes of sales foreseen for certain models are not particularly high, for example on an annual basis, it is preferable in any case immediately to realize the continuous whole production of at least one year to contain the cost of production of said model. Clearly, this system can cut into the quality of the product sold and leads to detrimental storage costs, as the products remain stored for a long time. Besides, the selling risk is increased, for example in terms of the possible unexpected rapid obsolescence of the product, and adds incrementally to the financial costs for storage of capital tied up with the unsold stock of the product and to the saturations with use of the molds which are used solely for the restricted period of time necessary to deplete the volume in stock.

To still further minimize costs of production, the state of the art insists upon the use of machinery of progressively higher speed and which can be arranged in such a manner that each individual tire is produced in the least time possible, obviously with equal or better quality of the finished product.

Thus, systems with high capacity of production in terms of pieces produced per unit of time have been realized, adopting machinery for their manufacture having a reduced possibility of modification (that is, with the capacity to produce only a limited variety of models of tires), but which maximize the production in terms of great numbers of tires with identical structural features. Purely as an example, in the more modern systems it is possible to speak of a productivity equal to two green tires per minute.

In essence, the problem of producing a limited quantity of tires in a vast plurality of different models in an economical manner simply still cannot be solved.

The Applicant has instead addressed the problem of producing a plurality of tires subdivided into a great number of models having various different features, in particular different structural and/or dimensional features, in other words the problem of realization of a line of tire production which furnishes the most diverse selection of various models at minimum cost.

It is clear that, as compared with tires produced in their entirety in a certain unit of time, the quantity of tires of one single model diminishes in proportion to the number of different models produced.

The Applicant has assumed that to resolve such a problem, results are not obtained particularly conveniently with a production process and machinery with high capacity of production in terms of identical pieces produced per unit of time but instead the manufacturer could preferably emphasize the flexibility of the process and the machinery, that is, emphasize the capacity to minimize the time required for changing devices and for controls which allow the production of a high number of tires of different structure and dimensions.

Studying the process of production of a plurality of tires once again, from the production of the components to consignment of the tire to storage for eventual distribution, the Applicant has found that the most critical points of the process are connected with : i) the phase of changing of the devices (extrusion die for extruders, drums and other fittings for manufacture of the green tire, molds for the vulcanization) and more in particular with the selection of the best moment within the process of production during which to effect such changes; ii) the costs of storage, in terms of the more the range of models is differentiated, the greater the quantity of product which must be held in storage (a predetermined number of pieces for each model being offered) and iii) the financial costs to immobilize capital relative to the number of molds being used.

The Applicant has surprisingly found that if the normal production of a series of tires is subdivided into a plurality of small lots of tires having the same dimensional and structural features and if said lots are produced in succession, alternating lots of various tires, then when the number of tires present in any lot is adequately proportioned, the productivity and the costs of the entire process are not negatively influenced. In fact the result is the advantage of being able to distribute the production of a series of tires, the tires being equal to one another, in a unit of time selected as desired, greater than that demanded for the continuous manufacture of corresponding green tires, reducing to a minimum or completely eliminating the stock of products to be stored. In fact, the lots of each model of tire are produced only from time to time when they are already required by the market, and the lots remain in storage only the time necessary for organization of the distribution. It is also possible to minimize the necessary mold stocks.

This has provided the advantage of also rendering economically convenient the production of small series of tires, for example 1200 pieces per year, which can be subdivided into more lots produced in such an intermittent manner during an interval of time of any desired length, for example 100 tires per month for 12 months.

In its primary aspect, the present invention refers to a method for distribution of the production of a series of tires, structurally or dimensionally equal to one another, in a time period (time of production) of greater value than that time period (time of preparation) required for making the green tires , comprising the following phases: preparation of the semimanufactured articles necessary for the making of said series of tires; assembly of said semimanufactured articles to make up as many green tires as correspond to said series; and vulcanization of said green tires in corresponding vulcanization molds, thus to realize the tires of said series, the method being characterized in that it comprises the following steps:
- to subdivide the number of tires contained in said serie into a group of blocks of tires wherein the number of tires contained in each block is essentially equal to the ratio between the tires contained in said serie and the days included in said production time period,
- to subdivide the number of tires contained in said serie into lots of tires where the tires contained in each lot do not exceed the number of tires able to be produced by one single vulcanization mold in the time period of one day,
- to make said raw carcasses in an intermittent manner, alternating the manufacture of one lot of raw carcasses with the manufacture of other raw carcasses having different structural or dimensional features, the number of lots manufactured daily being equal to the ratio between the number of tires contained in each block and the number of tires contained in each lot.

In another of its aspects, the present invention refers to a method of minimizing the number of vulcanization molds required to produce a predetermined quantity of tires, all equal each other, comprising the following phases: preparation of the semimanufactured articles necessary for the manufacture of said quantity of tires; assembly together of said semimanufactured articles for the manufacture of as many raw carcasses as correspond to said quantity; vulcanization of said raw carcasses in vulcanization molds, so as to realize tires in said predetermined quantity; the method being characterized by the following :
- manufacturing said raw carcasses intermittently, alternating the manufacture of one lot of raw carcasses, a submultiple of said predetermined quantity, with the manufacture of raw carcasses for other tires of different structural or dimensional features, up to the depletion of said predetermined quantity,
- vulcanization of one lot of raw carcasses in one or more identical molds, the number of said identical molds in simultaneous use being smaller than the number of molds necessary for vulcanization within a predetermined time of the quantity of raw carcasses manufactured in the same time period.

In accordance with a further different aspects, the present invention refers to a method for the production on the same line of production of a plurality of tires of various characteristics, distributed in at least two separate series, each a series of identical tires, each serie differing from the other series in terms of at least one structural or dimensional feature of said various tires, comprising the following production steps:
- prepositioning on the machinery of said line the devices connected with the production of a predetermined serie of tires;
- producing, on the machinery for preparation of semimanufactured articles of said line, the semimanufactured articles necessary for the production of the tires belonging to said predetermined serie;
- assembling on the manufacturing machines for said line, in reciprocally alternating arrangement, of said semimanufactured articles to form as many raw carcasses as required for said serie;
- vulcanization of said raw carcasses on the machinery for vulcanization of said line comprising vulcanization presses, each provided with at least one vulcanization mold, so as to realize the tires of said predetermined series;
- substitution of at least part of said devices with that relating to a different serie of tires;
- repetition of the production steps of said method for each series of said plurality of tires, the method being characterized in that it comprises the further production steps of:

- subdividing of the number of tires comprised in each series into a plurality of lots each comprising a predetermined number of tires, where the number of tires contained in the lot is smaller than the number of corresponding green tires able to be produced on said line in the frame of 24 hours;
- production of said plurality of tires in successive lots, alternating the production of a lot of green tires belonging to one predetermined series with the production of a lot of green tires belonging to a different series.

As already said, the production in lots also allows savings in the cost of purchase of the molds. In fact, with this methodology of production it is convenient to use a limited number of identical molds, preferably no greater than 10, advantageously no greater than 8, more preferably no greater than 6, and even more preferably no greater than 4. The Applicant has found particularly advantageous the selection of a number of molds equal to or less than 2, also for quantitative considerations, preferably for up to 48,000 tires per year, that is, producing at the maximum one lot of tires which are identical for that day for each day of production.

In addition, it has been found convenient to control the minimum number of tires contained in one lot, preferably on the basis of the following factors:
- time limit for storage of the semimanufactured articles, preferably assumed to be equal to 8 hours so as to limit the loss of adhesiveness of the various components, which could require further adjustment of the settings of the manufacturing machinery;
- time limit for accumulation of the green tires , assuming no greater than 24 hours so as not to compromise the quality of the green tires and so as to limit the accumulation of said green tires on the devices for holding and transferring the raw carcasses, for transfer to position for vulcanization;
- time necessary to execute the slowest production step: in the process and with the systems according to the invention this step is the vulcanization which requires a time preferably of between 10' and 35', averaging about 15', to execute the operation;
- economic burden of down machinery for changing of the devices in one typical day.

It has been found that, preferably, the number of tires contained in one lot is comprised between 30 and 150 and still more preferably comprised between 90 and 100 tires.

In another and different aspect, the present invention refers to a system comprising at least one line of tire production, for the production of a plurality of tires having various features, distributed in at least two separate series, each serie of identical tires, one serie differing from the other serie by at least one structural or dimensional feature of said different tires, each line of production comprising means for the preparation of the semimanufactured articles necessary for the production of said tires, means for the reciprocal assembly of said semimanufactured articles to constitute raw carcasses of said tires and means for the vulcanization of said raw carcasses in corresponding vulcanization molds, characterized in that said means of vulcanization do not comprise groups of 10 or more molds equal to one another. Preferably, in each line of tire production the aforementioned means for the assembly of said semimanufactured articles comprise one single machine for the manufacture of the raw carcasses.

It has been found preferable that the means for preparation of the semimanufactured articles and the means for the vulcanization of the green tires are common to a plurality of separate lines of tire production.

In one of its further aspects, the invention proposes a system for the production of tires comprising at least one line of production in which the means for vulcanization corresponding to each line of tire production do not comprise groups of more than two molds identical to one another.

In another and different aspect, in the system according to the invention the means for vulcanization comprise exclusively molds which are different from one another.

The present invention will be described in greater detail in the following, as a nonlimiting example, with reference to the embodiments as represented in the attached drawings, in which:
Figure 1 shows the cross section of a traditional tire;
Figure 2 shows the basic diagram of a system of tire production according to the invention.

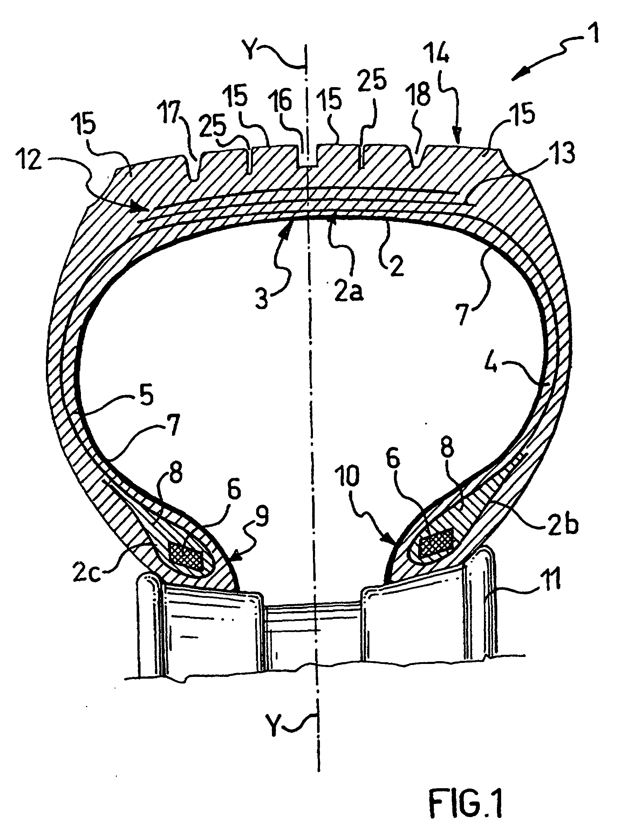

Figure 1 shows a traditional radial tire for vehicle wheels, indicated in its entirety as 1.

Tire 1 comprises a toroidal, hollow carcass, including a central crown portion 3, from the borders of which separate two sidewalls 4, 5, directed radially toward the sidewalls, terminating in annular zones which are very rigid, usually called beads, reinforced with at least one pair of bead cores 6.

The support structure for said carcass comprises at least one reinforcement ply 2a of which the opposite lateral skirts 2b, 2c are turned back, preferably from the interior toward the exterior, each one passing around a corresponding core.

To the external perimetral border of each core 6 is applied an elastomeric filler 8 which occupies the space defined between the reinforcement ply 2a and the respective lateral skirts 2b, 2c of reinforcement ply 2a.

As aforementioned, the axially facing zones of the tire comprising said cores 6, and their fillers 8, form the so-called beads, indicated in their entirety with 9 and 10, intended for anchoring of tire 1 on a corresponding mounting rim 11 of the wheel of a vehicle.

A belt structure 12 can be coaxially associated with said carcass structure 2 and belt structure 12 can comprise two or more layers of rubberized fabric strips 13 realized by means of thin textile or metal cords incorporated in a sheet of compound.

A tread band 14 is attached to belt structure 12 and the ground is in contact with tire by means of said tread band.

The tread band 14 comprises a plurality of incisions 25 and grooves 16, 17, 18 which delimit a corresponding plurality of ribs and/or blocks 15, and all together define a tread design.

The general structure of the tire just described is long and well known by the skilled in the art so that it would be useless to go into greater detail: it is to be noted simply that the same tire structure can comprise many other structural elements such as for example reinforcement borders in the beads, filling pads under the estremities of the belt structure, liner 7 on the ply of the carcass, in radially internal arrangements, and other fittings also, in relation to any specific model of tire.

Traditionally the process of manufacture of a tire, and more precisely the process of assembly of the semimanufactured articles, comprises two successive phases, which will be generally already known. They are to be found for example in Italian Patent No. 1.236.885.

During the first phase, by means of a suitable drum used for manufacture, preferably of the rigid and collapsible type, the carcass is prepared in the form of a cylindrical sleeve, without the belt and tread, with the sidewalls preferably opened out toward the exterior; in the second phase the sleeve is shaped torically on a suitable expansible drum used for shaping, and the belt structure and the tread band are applied to the crown of the same, preferably having been pre-assembled at some point apart, through a specific auxiliary manufacturing drum, and the sidewalls are folded back axially toward the interior, on the raw carcass. All of the semimanufactured articles necessary for the manufacture of the green tire are fed into the manufacturing system by means of feeding devices associated with the building machine.

These two phases can be executed on the same building machine or on two separate machines respectively for the primary and the secondary phases. For the scope of the present invention are also considered the two separate machines, as constituting one single manufacturing machine. Still, for the scope of the present invention, any individual manufacturing machinery preferably comprises one single line of tire production.

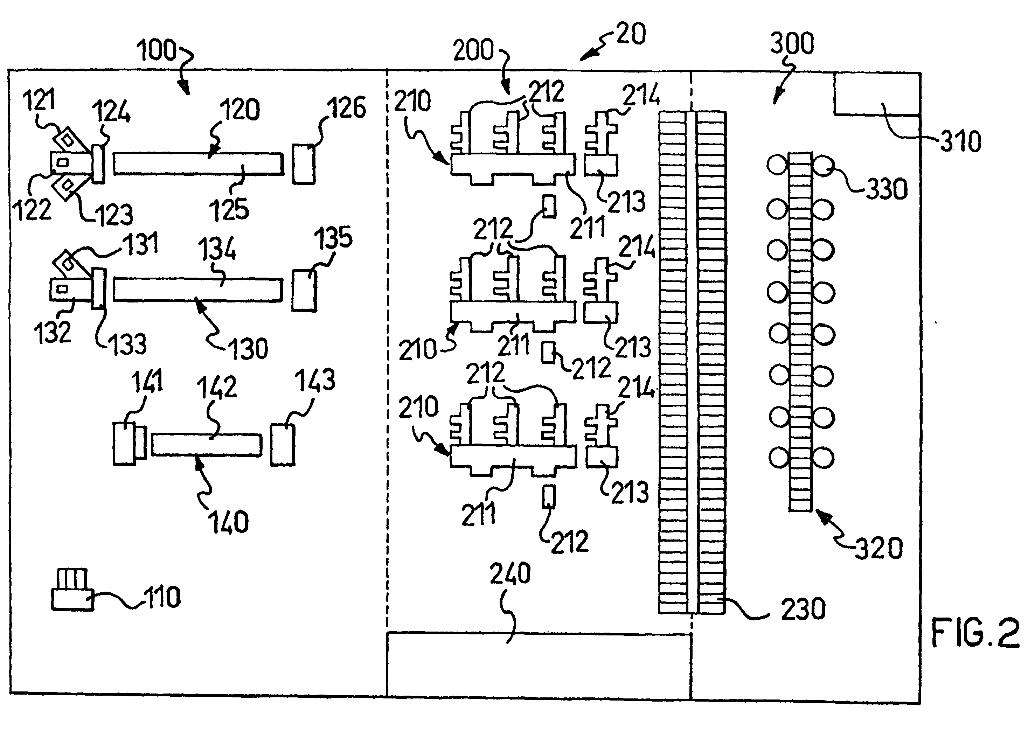

With reference to Figure 2, a system of production is indicated in its entirety with 20, which functionally subdivides into 3 principal areas : one area 100 for production of the semimanufactured articles, one area 200 for manufacture or assembly of the semimanufactured articles and one area 300 for vulcanization of the green tires .

At least one cutter 110 is within the area 100, as are also an extruder arrangement 120 to produce tread bands, an extruder arrangement 130 to produce sidewalls and fillers, and a calender 140 to produce liners. Use of extruder arrangements advantageously allows for simultaneous extrusion of different components.

The cutter has the task of cutting thin strips of the sheets of rubber formed from the component production system for the feed of extruder arrangements 120 and 130 and calender 140, which produced articles are then preferably collected on a spool.

Alternatively the aforementioned produced semimanufactured articles are fed directly into the manufacturing systems.

In the same area can also be present systems for rubberizing fabric and the ply-cutting machines which produce the plies of the carcass, the belt layers and other semimanufactured articles in the form of continuous ribbons, these too preferably collected on spools.

Preferably, each spool contains ribbons of appropriate length to allow production of a predetermined number of tires having identical structural and dimensional features.

However, these semimanufactured articles of rubberized fabric can be produced in other areas, even in other plants, and the spools of product can be transported directly to the area of carcass manufacture.

It is functionally part of the same area, even when it is preferably located elsewhere in a physically separate zone, the system of core manufacture.

In the area 200 are found three manufacturing systems 210, each of which has the capacity to assemble the semimanufactured articles produced in area 100 and the other semimanufactured articles, produced traditionally in various areas of production, into one carcass 2. A zone 240 is used for the handling and placement of the replacing tools of the manufacturing system 210. A system of placement and movement 230 provides for transfer of carcasses 2 from manufacturing area 200 to vulcanization area 300.

A plurality of presses 330 are located in vulcanization area 300, with the respective positioning for vulcanization, assisted by a common device for removing the cured tires, the entirety indicated as 320. A furnace 310 allows for preheating of the vulcanization molds for immediate use as soon as its mounting on the relevant press. The vulcanization presses present either one or two postings for vulcanization and each vulcanization posting is equipped with a mold separable in at least two parts to allow for the loading of the green tire and the removal of the vulcanized tire. For purposes of the example there are presented 16 presses, each one with a pair of postings vulcanization, for a total of 32 available postings.

An inflatable curing bag of elastomeric material works in the traditional manner inside the mold.

It is important to clarify that one single mold can be used to mold only one predetermined tread design and/or one predetermined pair of sidewalls for one predetermined tire size.

There are also present, but not shown, primary moving devices to carry the molds from preheating furnace 310 to the press, for assembly in succession in the designated position for the vulcanization, and vice versa. Other devices for movement feed the green tire to the position for vulcanization and, once vulcanized, transfer the tire from the vulcanizing machinery to a quality control area.

Coming now to describe the cycle of production of a tire, it is important to remember that one particular model of tire is characterized by a predetermined plurality of features, and that, consequently, the individual components must be realized from time to time in a different manner in accordance with the model of tire in which they will be eventually assembled.

In one area not shown in Fig. 2 are prepared, in a known manner, sheets of compounds which will be used to produce some types of components. Still in a known manner, each of these sheets becomes cut by cutter 110 into thin strips so as to be able to be fed in an adequate manner, according to the type of compound the extruder assemblies 120 for the manufacture of the tread band 14, or the extruder assemblies 130 for the manufacture of sidewalls 4, 5, and of the fillers 8 or the calender 140 for the manufacture of the rubber sheets. Besides, the corresponding fittings are mounted on extruder assemblies 120 and 130, which are for example extrusion dies, and there is carried out the control of the parameters of operation, including the rotation velocity of the extrusion screws on the extruder assemblies or the rotation velocity of the cylinders and the distances center to center of the cutters limiting the width of the liners on calender 140, in such a manner as to obtain components adapted to the model of tire which is desired in the production.

The graphic symbols used in Fig. 2 indicate roughly the bodies of the extruder assemblies 121, 122, 123, 131, 132, the extrusion dies 124, 133, the basins 125, 134 for collection and cooling of the extruded product, the group of cylinders 141, the table 142 for collecting and cooling the liners, and the spools 126, 135, 143 for storage of semimanufactured articles.

One example of production of components for co-extrusion comprises a preshaping device arranged on the common extrusion opening of three extruders, closed by an extrusion die for the tread band. The tread band is produced directing two components, primary and secondary, to the extrusion opening, across extrusion paths defined by corresponding preshaping channels existing in the preshaping device. An auxiliary channel is also present in this device, and the terminal part of such a channel flows together perpendicularly in the course of extrusion of the primary and secondary compounds, in proximity with the extrusion opening.

A third component, directed into said auxiliary channel, becomes distributed homogeneously, with a smearing effect, under the bottom surface of the tread band which crosses over the extrusion die.

Tread band 14, sidewalls 4 and 5, fillers 8 and liner 7 are therefore produced in the form of continuous strips which are collected on spools for simpler storage and subsequent distribution to the manufacturing machines.
In a different area, not shown in Fig. 2, still in traditional manner, are produced other components, including the plies 2a of the green tire and the belt layers 13, realized by thin textile or metal cords incorporated in a sheet of compound, all collected on corresponding spools, and cores 6, which are also preferably already assembled with a suitable filler 8.

It is to be emphasized that the various semimanufactured articles, in particular those produced on extruders and calenders, can be fed directly to the manufacturing assembly without passing through the intermediate storage phase, particularly on spools : this situation does not substantially modify the method of production of tires according to the invention, which will be established in the following, but will be able to include variations with respect to the process with storage when necessary with regard to the choice of sequence of models and of the relative lots of tires in production, to achieve optimization of the flow of materials and of the productive process.

The phase of carcass manufacture is known and has already been briefly described in the above. It has already been stated that the system of tire production according to the invention prefers the use of machinery of high flexibility : as far as the manufacturing phase is concerned, it is possible for example to refer to Italian Patent No. 1.254.431 which describes one particular system for the manufacture of green tires.

Such a system assumes the adoption of a plurality of manufacturing drums which move along a predetermined manufacturing path.

According to a prearranged sequence, each drum meets primary work stations, each one assigned to the application of a main component common to a plurality of models of green tire comprised within a certain range of product. All primary work stations are intercalated with auxiliary work stations assigned to the application of accessory components, each one specifically provided for one particular type of green tyre. Each of the auxiliary stations can be removed and replaced with a different station as a function of the type of process in progress, and each is movable between one rest position which is perpendicular and remote from the path of manufacture and one work position in which it is placed for operation in the path of the manufacturing process, to provide application of the respective accessory component. The primary work stations are helpful in being reciprocally placed close together and spaced along the path of manufacture.

One particular method and device for the manufacture of a tire with the ends of the sidewalls either overlapping the ends of the tread band (top-sidewalls) or applied under said ends (bottom sidewalls) comprises the phases of inserting of an anti-adhesive elastic tubular element around the carcass ply at each end of a building drum, to wrap around the sidewalls on said elements, to apply another tubular element on said sidewalls and to overturn said tubular elements to open out the sidewalls into open position on the side of the building drum.

The carcass, in the form of a cylindrical sleeve with open sidewalls, is transferred on a shaping drum where it is shaped torically and then pressed against the belt assembly and the tread band which have been previously prepared in another place. Successively, first the ends of the band are dropped on the raw carcass, then the sidewalls are folded back against the raw carcass and over the ends of the tread band. On the contrary, doing first the folding back of the sides with respect to the dropping of the ends of the tread band, we get the tyre below with sidewalls.

It is also important to note how the changing of even one structural or dimensional feature of the desired tire can comprise a modification on the line of production, to modify the process or any controls or directly for the partial or complete change of the tools: for example substituting the drums with other drums of various dimensions, activating or deactivating auxiliary work stations (for example the auxiliary station intended to realize tires with two carcass plies.

Consequently, returning to the process for production of a tire, on the distribution devices of the area of manufacture 200 are mounted the components (carcass plies of the green tire; liner; sidewalls; cores with their filling; strips of belt, tread band), necessary to produce a green tire in accordance with the model of tire which is intended for production, while on the manufacturing machine 210 are prearranged the tools, taking them from storage 240.

Finally, the corresponding setting up are effected on the tire building machine.

During the manufacturing phase, made at ambient temperature, the aforementioned components, collected on spools with the exception of the cores, or fed directly from the corresponding preparation machinery, are cut into sections of predetermined size, and assembled together and with all of the remaining components of the tire, including the cores, to form the raw carcass of said tire.

Preferably the manufacturing machine provides double distribution devices for semimanufactured articles, in such a manner as to allow the loading of the semimanufactured articles, and the corresponding arrangement of the machinery, to produce the lot of green tires intended to follow being the one on production without interrupting the normal cycle of production of the manufacturing machine.

Such a green tire thus is moved on the system 230 for placing and movement, which conducts it into area 300 for subsequent vulcanization.

In advance, the place for vulcanization, in which the green tire will be vulcanized, is fitted with a mold of the proper size which presents the predetermined design of sidewalls and tread, in order to work on the same green tire. In case the mold required is not already mounted at the prearranged place, this will be preheated and then mounted in said place.

If the mold is already engaged with the vulcanization of another green tire and there are no others available with the same tread design and the same size, the green tires being discharged from the area of their manufacture will be accumulated at a waiting point until a suitable mold is available.

In this sector, great flexibility of the machinery is obtained preferably by using presses provided with devices for the rapid exchange of curing bag and mold, for example those described in the corresponding patents: Italian Patent No. IT 1.176.523, European EP 270.022 and European EP 459.375.

The device for a fast mold exchange of the Italian patent, comprising blocking means constituted of pins with heads of elliptical shape mounted on the mold, which are introduced into suitable cavities of the body of the mold blocking the same on the corresponding press, causes rotary movement of the aforementioned elliptical heads. Obviously, the movement in inverse direction make free the mold which can be thus moved away in rapid mode, automatically, and without direct intervention of the operator.

The movement of the mold, in accordance with patent EP 459.375, is made preferably by means of coupling means attaching it to a translatable arm moving along a vertical column, mounted on the vulcanization press, and rotating around said column, in such a manner as to allow the removal of the mold by a means of transport and its mounting on the press, and, in the opposite direction, the release of the mold from the press and its placement on a means of transport for introduction into the molds holder.

Patent EP 270.022 illustrates means to allow rapid and automatic hooking and unhooking of the vulcanization chamber to and from the corresponding mechanism for movement. The two vices which block the beads of the chamber comprise annular framework skeletons coaxial with the axis of the chamber in which are lodged, in work positions, the heads of a plurality of pegs or hooks, mounted in the assembly devices with said vices, which can be radially arranged in both directions, between said work positions and a rest position, in which said pegs or hooks are completely re-inserted in the relative devices, thus allowing the axial unhooking of the chamber of the mechanism.

Finally the tire, once vulcanized, is transported to a traditional area, not shown, for quality control. The tires which pass quality control are then stored in storage areas for subsequent distribution.

The tools and controls of the machinery as described in the preceding are not modified as long as production of tires of the same model is continued, in other words with the same dimensional and/or structural features and with the same design of tread and sides.

Not until the model of tires will be changed will it be necessary, according to the modified feature, to intervene in the process and/or the machinery of production

For example the realization of a series of tires having a different width will require the substitution of the extrusion die for the tread band and a different control of calender 140 for production of the liner. The new size will possibly require a change of the tools (drums of various sizes) on the manufacturing machinery 210 and new controls. Finally it will be necessary to mount a mold of corresponding size on at least one vulcanization press.

In case someone needs to produce a new series of tires with various different section heights, in this case substitution of the extrusion die for the sidewalls will be required and once again the calender arrangement is controlled for production of the liner. Cores of various sizes can be required and in a corresponding manner the tools are replaced on the manufacturing machine and also the vulcanization mold.

It is clear that the more structural features are changed between the production of one model of tire and the new model, the more elements in the production system should be substituted, modified or at least controlled in various different manners.

Area 200 of Fig. 2 includes three manufacturing machines which are all fed from the same machines for preparation of semimanufactured articles in the upstream position, in area 100 and in the other areas cited but not shown, and fed in their turn to the area of vulcanization 300, the downstream position.

The symbolism adopted in Fig. 2 represents diagrammatically the manufacturing machinery 211 of the first phase, supplied with semimanufactured articles by an assembly of distribution devices 212, in line with the manufacturing machinery 213 of second phase, this too supplied from the relevant device 214 for distribution of strips of the tread band.

According to the invention, each manufacturing machine is preferably associated with one single line of tire production : only a share of the machinery for preparation of semimanufactured articles can belong to the same line of production, while included in the line of production are all of the positions of the vulcanization arrangement fed from the manufacturing machinery of said line in the time period of 24 hours, which herebelow are also defined as the global vulcanization unit.

The single vulcanization mold, or the assembly of all the identical molds working at the same time, are hereinafter also defined as the vulcanization unit for the lot.

Before proceeding to a detailed examination of the problems addressed by the application and solved by the present invention, it is suitable to make certain assumptions, to be considered purely as a nonlimiting example, so as to consider the problems in proper perspective and the solutions in correct quantitative terms.

If one then hypothesizes that a manufacturing machine having considerable flexibility produces one green tire on the average every 1.5 minutes, consequently, the daily production of the line will be 40 green tires per hour, in other words 960 green tires per day. Varying such a manufacturing time then also modifies the aforementioned values: in practice, with the actual systems, it is possible to think of a time of manufacturing per green tires variable between 30 seconds and four minutes, keeping account also of time out for programmed halts.

In all of the following contexts, for simplicity, no accounting is made of the potential losses of production time for possible stopping of the machinery for accidental nonprogrammed causes.

It is already established that the average duration of the cycle of vulcanization for a tire, in the cases under our consideration, is 15 minutes, from which it is deduced that a vulcanization mold produces 4 tires per hour, in other words 96 tires per day. In that case, the manufacturing process will saturate or use up as many as 10 vulcanization molds, or the global productive unit of vulcanization consists of ten molds. Different time values for the manufacture of green tires and/or for the length of the vulcanization cycle will consequently modify the number of molds used in the global production unit for vulcanization.

Assuming the working year is composed of 250 days , an yearly production for each line of production can be obtained on the order of about 240,000 tires.

It appears that for the production equal to or multiples of this value for one single model of tire it is convenient to use high capacity production lines, even if they are not adequately flexible, and consequently, taken to the extreme, it is never necessary in the course of the year to change the tools on the line of production.

Coming then to the problems met by the Applicant, a first problem has been that of distribution in a uniform manner during one year the production of some plurality of series of tires, each limited to a number of tires which can be produced in the space of a few months.

In the case under consideration, the Applicant wished to produce 10 different models of tires, each model in a quantity equal to about 24,000 tires per year. According to the known technology, the ten series of tires were produced in succession, changing the tools of the machinery ten times in the course of the year.

Each series required a manufacturing time equal to twenty-five working days and the 24,000 tires produced were placed in storage to feed an average market demand equal to about 2,000 pieces per month.

In accordance with the invention the various series of tires were subdivided beforehand each series into a plurality of lots, where each lot contains preferably the same number of tires, still more preferably equal to the daily production of one mold. In practice, the ten series of tires were subdivided each into 250 lots of 96 tires each.

The production of said lots of tires was carried out alternating the production of one lot of green tires of one series with those of a lot of green tires of a different series, changing series continually until exhaustion of the number of series provided, to then begin again back at the beginning.

In other words, the manufacturing machinery, suitably fed by the upstream machinery in the process, produces a first lot of raw carcasses of the first series, then it goes on to changing the tools and of the relative controls, and thus the manufacturing machinery produces a second lot belonging to the second series and thus and so forth for eight more times until a lot of each series is produced, before beginning again with another lot of the first series.

It is now possible to observe how the method of the invention has allowed the production of one lot of tires per day for each of the ten series in production, sending a production average for each series of about 2,000 pieces per month on to storage, in other words a number substantially identical to the average market demand. The necessity of storage of the tires has been practically eliminated and the storage has provided solely as point for collection and/or organization of the following immediate distribution to the market.

It is observed that the method just described is also applied conveniently to the production of limited or highly limited series of tires since the relevant lot can be introduced into production very few times in the course of the year: in practice, preferably, the minimum number of tires of one series ought to be equal to the number of tires of the minimum lot. Series of tires which provide a smaller number of pieces than that of the minimum lot will preferably be added to other series, from which they differ only by features of appearance in such a manner as to require simply the changing of only the mold or the presence of another mold in the global vulcanization unit.

It is also to be noted, since there is no connection relative to the quantity of different series and the number of tires of which the various series are constituted which are simultaneously in production : therefore, in practice, the lots produced in succession are independent from one another, they can belong each to a different series, as many as can be repeated in the space of the same day in its capacity as belonging to a reduced number of series, but not less than two different series.

In other words, identifying the lots of ten different series of tires with A,B,C,D,E,F,G,H, I, K, the possible sequences are comprised between that with the maximum variance, in other words A, B, C, D, E, F, G, H, I, K, and that with the maximum repetition activity, in other words A, A, A, A, A, A, A, A, A, B, independently from the positions of the lots in the range of the sequence.

A different problem met by the Applicant has been that of minimizing the number of vulcanization molds required to produce a predefined quantity of tires, equal to one another. Going back to the preceding example for simplicity, it is to be noted that the production in a continuous manner, according to present technology, of each series of tires required five identical molds each of which remained operative for fifty days : it is not in fact possible to accumulate the green tires produced in the space of fifty days (time of manufacture) to vulcanize them progressively in the space of one year (time of production) without degradation of quality which makes the raw carcass unusable even before subjecting them to vulcanization.

Instead, in accordance with the invention, the corresponding green tires are manufactured intermittently, alternating the manufacture of one lot of green tires, a submultiple of said predefined total quantity to be produced, with the manufacture of other tires of different structure or size, until exhaustion of the aforementioned predefined quantities, maintaining an equal number of molds in operation simultaneously, less than the number of molds required for vulcanization within a prefixed time of the quantity of green tires manufactured in the same time period. For calculation it is suitable to refer to the quantity of green tires produced daily by the manufacturing machine, and in any case the number of molds in operation simultaneously, equal to one another, which is preferably a ratio equal to one.

We want now to put into evidence that the method according to the invention, in certain circumstances of market demands, allows for the use of one single mold for each series, instead of the ten molds, as long as the single lot of each series produced daily satisfies the daily production for the corresponding mold, which, on the contrary, remains in operation for the entire year, with a maximum overall savings of 90 molds.

Preferably, the minimum number of pieces in the lot is that which saturates the vulcanization mold for one day: increasing the number of identical molds permanently in production, it is possible to increase the number of pieces in the same series produced daily and/or the production speed of the lot, but the advantage of minimization of the number of molds is progressively lost.

The invention will be useful when a series of tires comprising a number of pieces smaller than the yearly production capacity of the line of manufacture should be produced in a limited time, for example to support a campaign for launching a new product or a sales campaign for a seasonal product, which for example could be a winter tire.

Suppose for example the production of a series of about 24,000 identical pieces in the space of three months to adequately accommodate a certain seasonal market. In this case, according to the invention, the number of tires contained in said series is subdivided into a group of blocks of tires wherein the tires contained in each block are substantially equal to the ratio between the tires contained in said series and the days (90) included in said production time, in other words, for the case in question, 267 blocks.

The number of tires contained in said series is again divided into lots of tires where the tires contained in each lot do not exceed the number of tires (96) which can be produced by one single vulcanization mold in the space of one day, and that is to say, still considering the case in question, into 250 lots of 96 tires each. Then the corresponding green tires are manufactured intermittently, alternating the manufacture of one lot of green tires with the manufacture of other raw carcasses of different structure or size, manufacturing daily a number of lots equal to the ratio between the number of tires contained in each block and the number of tires contained in each lot, in other words, in the case in question, three lots per day with the corresponding saturation of three identical vulcanization molds.

The method according to the invention thus offers the further advantage of not completely saturating a line of production, even for a limited time, with one single model, but of making it available for simultaneous production of other series of different models of tires.

The invention thus has allowed the solution of still another problem, in other words that of production in parallel instead of in series, in other words in simultaneous mode instead of in succession, of a plurality of tires distributed in a plurality of (at least 2) series or different models of tires.

The preceding description has illustrated how the problem is solved by producing the required green tires in an intermittent manner, for successive lots of different models, alternating said lots with one another, by means of continuous substitution of the relative lots on the line of production: in practice, intermittent production of green tires is combined with continuous vulcanization of said green tires.

It is important to note that it is not necessary to await the vulcanization of the last green tire of one lot before initiating manufacture of the succeeding lot. In fact, the production of lots in sequence must be observed at the level of single units production. When one unit has terminated its production of a first lot of tires, provided an optional new prearrangement of the tools, it can initiate the production of the second lot. In the meantime the semimanufactured articles and/or the green tires produced can be inserted directly in the manufacturing machinery or to the vulcanization or can remain stored in storage for subsequent use or the following vulcanization within a prefixed time according to the criteria already illustrated.

Single production unit can be considered, for example: each group of extruder assemblies 120 and 130, the calender 140; each manufacturing machinery 210, each place for vulcanization.

Preferably the assembly of all of the places for vulcanization, provided with identical molds, or having identical "tread pattern-tire size" can be identified as single production unit.

In accordance with the invention, in a system for the production of a plurality of tires which differ from one another by at least one structural or dimensional feature, the number of unit production of five or more identical molds is preferably lower than the number of various lines of production introduced into said system.

According to another aspect, the assembly of all the posting for vulcanization, provided with molds having identical size and different tread design but fed with green tires having the same structural features is also identified as a single production unit.

Still in accordance with the invention, the global production vulcanization unit associated with each line of production preferably does not comprise more than four identical molds and, still more preferably, not more than two identical molds.

According to one further aspect, the means for comprised introduced into a system of tire production according to the invention comprise only vulcanization molds which are different from one another.

Preferably the number of tires contained in a lot is based on the following factors:
- storage time limit of the semimanufactured articles, preferably fixed in terms of 8 hours to limit the variation of thackiness of the various components, which could require modification of controls of the production machinery, for example the pressing value of the devices which press together the various semimanufactured articles;
- storage time limit of the green tires, preferably fixed at 24 hours to limit the accumulation of green tires on the holding and transfer devices of the green tires for the places for vulcanization;
- time required to execute the slowest production step which in the process according to the invention, done by the molds and known processes, is that of vulcanization, which preferably allows for a time of between 10' and 35', averaging 15', to complete the operation;
- burden of the changing of tools in one typical day, in terms of downtime for the machine, in other words of lost product.

In accordance with the invention the number of tires contained in the lot, for each line of production, is preferably smaller than the number of corresponding green tires which can be produced on said line in the space of 24 hours.

Considering then the productivity of the manufacturing machinery in relation with the productivity of the mold, the Applicant has preferably fixed the number of green tires contained in the minimum lot between 30 and 150, more preferably between 80 and 120, and still more preferably between 90 and 100, in particular equal to 96 green tires, in other words the daily saturation number of one mold.

More preferably what is particularly suitable is a lot equal to 32 green tires, with a capacity to allow programming of a mold change every 8 hours, in other words allowing for the saturation of a mold during the duration of one working cycle.

It is clear that with the increase of the number of pieces per day required it can be convenient to increase the number of green tires of the lot or, more preferably, the number of identical lots produced daily.

The high number of changes of tools and of variations of tire models comprises temporal overlaps of operations which are separate from one another, for example, in the same moment it is possible to have the machines for preparation of the semimanufactured articles which produce for of one lot of a first series, the manufacturing machines which produce a lot of a second series and the vulcanizing places which vulcanize the lot of a third series: this makes it convenient to control at least part of the flow of materials and to control the machinery by means of automatic control systems, for example by means of the use of a lot code system, controlled by a computer, preferably a bar code, opportunely associated with the semimanufactured articles and all green tires. This lot code, easily read by a bar code reader, allows for building up a record of and automatic verification of the correctness of the tools and the controls on the production machinery, the feed of suitable component parts to obtain the green tire with the features provided for which particular lot and the setting of the correct mold on the place for vulcanization.

Finally it must be clear that the preceding description has been referenced, solely as an example, on systems of production which provide the preparation and storage of semimanufactured articles to be assembled in sequence in corresponding green tires. However the invention is also applied to the system of production which does not provide these intermediate phases of preparation of semimanufactured articles since the green tire comes readly on the suitable support device (example: manufacturing drum), building directly on said devices the various elements forming a green tire, in other words the carcas plies of the green tire, the layers of belt, the sidewalls, the tread band, and any other necessary parts, making use of them all, if necessary, and also traditional machinery (extruders and calenders) which directly feed said support devices.

According to the Applicant, the method of production in accordance with the invention will in some degree to influence the modality of the request for of the product which will be able, in accordance with the arrangement, to be carried out in small quantities (or lots), thus limiting the necessity of making forecast (in other words governing orders) and long-term investments.

## Claims

1. Method for the production on the same line of production of a plurality of tires (1) having various features, distributed in at least two separate series, each series of identical tires, one series differing from the other series by at least one different structural or dimensional feature of said series of tires, comprising the following production steps:
- providing on the machinery of said line tools in connection with or associated with the production of one predetermined series of tires (1);
- producing, on the machine for preparation of semimanufactured articles for said line (2a, 14, 4, 5, 6, 7), the articles necessary for the production of the tires (1) belonging to said predetermined series;
- assembling together, on the manufacturing machines of said lines, said semimanufactured articles (2a, 14, 4, 5, 6, 7) to form as many green tires (2) as required for said series;
- vulcanizing green tires frames (2) on the vulcanization machinery of said line comprising vulcanization presses, each provided with at least one vulcanization mold, so as to realize the tires (1) of said predetermined series;
- repeating the production steps of said method for each series of said plurality of tires (1), the method being **characterized in that** it includes the following production steps, including:
- subdivision of the number of tires (1) in each series into a plurality of lots constituted of a predefined number of tires, where the number of tires contained in the lot is smaller than the number of corresponding green tires (2) which can be produced on said line in the space of 24 hours;
- production of said plurality of tires (1) by assembling said green tires in successive lots, alternating the manufacture of one lot of green tires belonging to one predetermined series with the manufacture of another lot of green tires belonging to a different series.

2. Method as in claim 1 **characterized in that** the number of tires (1) comprised in each lot is determined as a ratio between the prefixed time limit of storage for the semimanufactured articles and/or for the green tires (2) and the time required to execute the slowest production step.

3. Method as in claim 2, **characterized in that** the maximum predefined time limit for storage is 24 hours.

4. Method as in claim 2, **characterized in that** the maximum predefined time limit for storage is 8 hours.

5. Method as in claim 2, **characterized in that** the slowest production step is the vulcanization step.

6. Method as in claim 1, **characterized in that** the number of tires (1) contained in a lot is between 30 and 150.

7. Method as in claim 1, **characterized in that** the production unit for vulcanization which vulcanize a number of tires corresponding to a lot comprises vulcanization presses (330) equipped with molds having identical size and different design.

8. Method as in claim 1, **characterized in that** the production unit for vulcanization which vulcanize a number of tires corresponding to a lot comprises only different molds.

9. Method as in claim 1, **characterized in that** the machinery for vulcanization of said line does not include groups of more than five identical molds.

10. Method as in claim 9, **characterized in that** all of the molds comprised in said vulcanization machinery (320) are different from one another.

11. System comprising at least one line of tire production, for the production of a plurality of tires (1) of different features, distributed in at least two separate series, each of identical tires, one series differing from the other series by at least one structural or dimensional features of said different tires, each line of production comprising means for the preparation of semimanufactured articles (2a, 14, 4, 5, 6, 7) required for the production of said tires, means for the reciprocal assembly of said semimanufactured articles (120, 130, 140, 210) to make up green tires (2) and means for the vulcanization (310, 320) of said green tires in corresponding vulcanization molds, **characterized in that** said means of vulcanization do not comprise groups of five or more identical molds.

12. System as in claim 11, **characterized in that** in each line of production of tires said means for the reciprocal assembly of said semimanufactured articles comprises one single machine for the manufacture of said green tires.

13. System as in claim 12, **characterized in that** said means for the preparation of the semimanufactured articles and said means for the vulcanization (310, 320) of green tires are common to a plurality of separate lines of production of tires.

14. System as in claim 12, **characterized in that** in each line of production of tires the corresponding means for vulcanization do not comprise groups of more than two identical molds.

15. System as in claim 11, **characterized in that** said means of vulcanization comprise only molds different from one another.

16. System as in claim 11, **characterized in that** the flow of materials, the control of the tools, the storage of semimanufactured articles and of green tires and the setting of the machinery are monitored by means of automatic control systems, governed by computer, to automatically set and verify the correctness of the tools and of the settings on the machinery of production, the feed of compatible components to obtain green tires with the desired features for the particular lot in the process of manufacture and mounting of the correct mold on the preset vulcanization place.

17. System as in claim 16, **characterized in that** said automatic control systems are made by means of the use of lot codes associated with the semimanufactured articles and the green tires, readable by means of code readers.

18. System as in claim 17, **characterized in that** said lot codes are bar codes.

19. Method to minimize the number of vulcanization molds required to produce a predetermined quantity of identical tires, comprising the following steps:
- preparation of the semimanufactured articles (2a, 14, 4, 5, 6, 7) necessary for the manufacture of said quantity of tires (1);
- assembly together one another of said semimanufactured articles (2a, 14, 4, 5, 6, 7) for the manufacture of as many green tires (2) as correspond to said quantity,
- vulcanization of said green tires (2) in said vulcanization molds, so as to realize tires (1) of said predefined quantity;
the method **characterized by**:
- manufacture of said green tires (2) in intermittent mode, alternating the manufacture of one lot of green tires the number of the tire of said lot being less than said predefined quantity, with the manufacture of green tires for other tires of different structural or dimensional features, until exhaustion of said predefined quantity,
- vulcanization of said lot of green tires in one or more identical molds, the number of said identical molds simultaneously in operation being smaller than the number of molds necessary to vulcanize within a prefixed time the quantity of green tires manufactured in the same space of time.

20. Method for distribution of the production of a series of tires, structurally or dimensionally identical to one another, in a time range (time of production) of greater value than that time period (time of manufacture) required for the manufacture of the corresponding green tires, comprising the following steps:
- preparation of the semimanufactured articles (2a, 14, 4, 5, 6, 7) required for the manufacture of said series of tires (1);
- assembly of said semimanufactured articles (2a, 14, 4, 5, 6, 7) reciprocally with one another for the manufacture of as many green tires (2) as correspond to said series,
- vulcanization of said green tires (2) in corresponding vulcanization molds, so as to realize tires (1) of this series;
the method being **characterized in that**:
- subdivision of the number of tires contained in said series into a group of blocks of tires wherein the tires contained in each block are substantially equal to the ratio between tires contained in said series and days included in said production time,
- subdivision of the number of tires contained in said series into lots of tires wherein the tires contained in each lot do not exceed the number of tires which can be produced by one single vulcanization mold in the space of one day.
- manufacture of said green tires (2) in intermittent mode, alternating the manufacture of one lot of green tires with the manufacture of other green tires of different structural or dimensional features, the number of lots manufactured daily being equal to the ratio between the number of tires contained in each block and the number of tires contained in each lot.

## Patentansprüche

1. Verfahren zur Herstellung einer Vielzahl von Reifen (1) auf der gleichen Produktionsstraße, wobei die Reifen unterschiedliche Merkmale haben, die auf wenigstens zwei gesonderte Serien verteilt sind, von denen jede eine Serie identischer Reifen ist, sich die eine Serie von der anderen durch wenigstens ein unterschiedliches bauliches oder abmessungsmäßiges Merkmal der Reifenserie unterscheidet und das Verfahren die folgenden Produktionsschritte aufweist:
- Bereitstellen von Werkzeugen in Verbindung mit oder in Zuordnung zu der Herstellung einer vorgegebenen Serie von Reifen (1) auf der Maschinenanlage der Straße,
- Herstellen der Fabrikate, die für die Herstellung der zu der vorgegebenen Serie gehörenden Reifen (1) erforderlich sind, auf der Maschine zur Aufbereitung von Halbfabrikaten (2a, 14, 4, 5, 6, 7) für die Straße,
- Zusammenfügen der Halbfabrikate (2a, 14, 4, 5, 6, 7) zur Bildung von so vielen Rohreifen (2), wie für die Serie erforderlich sind, auf den Fertigungsmaschinen der Straßen,
- Vulkanisieren der Rohreifenrahmen (2) auf der Vulkanisiermaschinenanlage der Straße, welche Vulkanisierpressen aufweist, von denen jede mit wenigstens einer Vulkanisierform versehen ist, um so die Reifen (1) der vorgegebenen Serie zu verwirklichen,
- Wiederholen der Produktionsschritte des Verfahrens für jede Serie der Vielzahl von Reifen (1),
- wobei sich das Verfahren dadurch auszeichnet, dass es die folgenden Herstellungsschritte aufweist, zu denen
- die Unterteilung der Anzahl von Reifen (1) in jeder Serie in eine Vielzahl von Lose, die von einer vorher definierten Anzahl von Reifen gebildet werden, wobei die Anzahl der Reifen in jedem Los kleiner ist als die Anzahl der entsprechenden Rohreifen (2), die auf der Straße in dem Zeitraum von 24 Stunden erzeugt werden können, und
- die Herstellung der Vielzahl von Reifen (1) durch Zusammenfügen der Rohreifen in aufeinanderfolgenden Losen gehören, wobei sich die Fertigung eines Loses von zu einer vorgegebenen Serie gehörenden Rohreifen mit der Fertigung eines anderen Loses von zu einer anderen Serie gehörenden Rohreifen abwechseln.

2. Verfahren nach Anspruch 1, **dadurch gekennzeichnet, dass** die Anzahl von Reifen (1) in jedem Los als ein Verhältnis zwischen der vorher festgelegten Zeitgrenze der Lagerung für die Halbfabrikate und/oder für die Rohreifen (2) und der Zeit bestimmt wird, die zur Ausführung des langsamsten Produktionsschritts erforderlich ist.

3. Verfahren nach Anspruch 2, **dadurch gekennzeichnet, dass** die maximale vorher definierte Zeitgrenze für die Lagerung 24 Stunden ist.

4. Verfahren nach Anspruch 2, **dadurch gekennzeichnet, dass** die maximale vorher definierte Zeitgrenze für die Lagerung 8 Stunden ist.

5. Verfahren nach Anspruch 2, **dadurch gekennzeichnet, dass** der langsamste Produktionsschritt der Vulkanisierschritt ist.

6. Verfahren nach Anspruch 1, **dadurch gekennzeichnet, dass** die Anzahl der in jedem Los vorhandenen Reifen (1) zwischen 30 und 150 liegt.

7. Verfahren nach Anspruch 1, **dadurch gekennzeichnet, dass** die Vulkanisierproduktionseinheit, die eine einem Los entsprechende Anzahl von Reifen vulkanisiert, Vulkanisierpressen (330) aufweist, die mit Formen ausgerüstet sind, welche eine identische Größe und einen unterschiedlichen Aufbau haben.

8. Verfahren nach Anspruch 1, **dadurch gekennzeichnet, dass** die Vulkanisierproduktionseinheit, die eine einem Los entsprechende Anzahl von Reifen vulkanisiert, nur unterschiedliche Formen aufweist.

9. Verfahren nach Anspruch 1, **dadurch gekennzeichnet, dass** die Vulkanisiermaschinenanlage der Straße Gruppen von mehr als fünf identischen Formen nicht aufweist.

10. Verfahren nach Anspruch 9, **dadurch gekennzeichnet, dass** alle Formen in der Vulkanisiermaschinenanlage (320) voneinander verschieden sind.

11. System mit wenigstens einer Reifenproduktionsstraße zur Herstellung einer Vielzahl von Reifen (1) mit unterschiedlichen Merkmalen, die auf wenigstens zwei gesonderte Serien von jeweils identischen Reifen verteilt sind, wobei sich eine Serie von der anderen Serie durch wenigstens ein bauliches oder abmessungsmäßiges Merkmal der unterschiedlichen Reifen unterscheidet und jede Produktionsstraße Einrichtungen zur Aufbereitung von Halbfabrikaten (2a, 14, 4, 5, 6, 7), die für die Produktion der Reifen erforderlich sind, Einrichtungen (120, 130, 140, 210) für die wechselseitige Montage der Halbfabrikate zum Aufbau von Rohreifen (2) und Einrichtungen (310, 320) zum Vulkanisieren der Rohreifen in entsprechenden Vulkanisierformen aufweist, **dadurch gekennzeichnet, dass** die Einrichtungen zum Vulkanisieren Gruppen von weniger als fünf oder mehr identischer Formen aufweisen.

12. System nach Anspruch 11, **dadurch gekennzeichnet, dass** bei jeder Reifenproduktionsstraße die Einrichtungen für die wechselseitige Anordnung der Halbfabrikate eine einzige Maschine für die Herstellung von Rohreifen aufweisen.

13. System nach Anspruch 12 **dadurch gekennzeichnet, dass** den Einrichtungen zur Aufbereitung der Halbfabrikate und den Einrichtungen (310, 320) zum Vulkanisieren der Rohreifen eine Vielzahl von gesonderten Reifenproduktionsstraßen gemein sind.

14. System nach Anspruch 12, **dadurch gekennzeichnet, dass** bei jeder Reifenproduktionsstraße die entsprechenden Einrichtungen zum Vulkanisieren Gruppen von mehr als zwei identischen Formen nicht aufweisen.

15. System nach Anspruch 11, **dadurch gekennzeichnet, dass** die Einrichtungen zum Vulkanisieren nur Formen aufweisen, die voneinander verschieden sind.

16. System nach Anspruch 11, **dadurch gekennzeichnet, dass** der Materialfluss, die Werkzeugsteuerung, die Lagerung der Halbfabrikate und Rohreifen und die Einstellung der Maschinenanlage mittels rechnergesteuerter automatischer Steuersysteme überwacht werden, um die Korrektheit der Werkzeuge und der Einstellungen an der Produktionsmaschinenanlage und die Zuführung kompatibler Bauelemente einzustellen und zu verifizieren, damit Rohreifen mit den gewünschten Merkmalen für das spezielle Los bei dem Fertigungsprozess und eine Anbringung der richtigen Form an dem voreingestellten Vulkanisierplatz erhalten werden.

17. System nach Anspruch 16, **dadurch gekennzeichnet, dass** die automatischen Kontrollsysteme mittels Verwendung von Loscodes erhalten werden, die den Halbfabrikaten und den Rohreifen zugeordnet und durch Codeleser lesbar sind.

18. System nach Anspruch 17, **dadurch gekennzeichnet, dass** die Loscodes Strichcodes sind.

19. Verfahren zum Minimieren der Anzahl von Vulkanisierformen, die zur Herstellung einer vorgegebenen Menge identischer Reifen erforderlich ist, wobei das Verfahren die folgenden Schritte aufweist:
- Aufbereiten der Halbfabrikate (2a, 14, 4, 5, 6, 7), die für die Herstellung der Menge der Reifen (1) erforderlich sind,
- Zusammenfügen der Halbfabrikate (2a, 14, 4, 5, 6, 7) für die Herstellung von so vielen Rohreifen (2) wie der Menge entsprechen,
- Vulkanisieren der Rohreifen (2) in den Vulkanisierformen, um Reifen (1) mit der vorher bestimmten Menge zu verwirklichen,
wobei sich das Verfahren auszeichnet durch
- die Herstellung von Rohreifen (2) in einem intermittierenden Modus, wobei sich die Fertigung eines Loses von Rohreifen bei einer Reifenzahl des Loses, die kleiner ist als die vorher bestimmte Menge, mit der Herstellung von Rohreifen für andere Reifen mit unterschiedlichen strukturellen oder abmessungsmäßigen Merkmalen bis zur Erschöpfung der vordefinierten Menge abwechselt und
- ein Vulkanisieren des Loses von Rohreifen in einer oder mehreren identischen Formen, wobei die Anzahl der identischen Formen, die gleichzeitig im Einsatz ist, kleiner ist als die Anzahl der Formen, die erforderlich ist, um in einer vorher definierten Zeit die Menge der in dem gleichen Zeitraum hergestellten Rohreifen zu vulkanisieren.

20. Verfahren zur Verteilung der Produktion einer Serie von Reifen, die im Aufbau und in der Abmessung zueinander identisch sind, in einem Zeitbereich (Produktionszeit) mit einem Wert, der größer ist als der Zeitraum (Fertigungszeit), der zum Fertigen der entsprechenden Rohreifen erforderlich ist, wobei das Verfahren die Schritte aufweist:
- Aufbereitung von Halbfabrikaten (2a, 14, 5, 6, 7), die für die Fertigung der Serie der Reifen (1) erforderlich sind,
- wechselseitiges Zusammenfügen der Halbfabrikate (2a, 14, 4, 5, 6, 7) zur Fertigung von so vielen Rohreifen (2) wie der Serie entsprechen,
- Vulkanisieren der Rohreifen (2) in entsprechenden Vulkanisierformen, um die Reifen (1) dieser Serie zu verwirklichen,
wobei sich das Verfahren auszeichnet durch
- eine Unterteilung der Anzahl der in der Serie enthaltenen Reifen in eine Gruppe von Blöcken von Reifen, wobei die in jedem Block enthaltenen Reifen im wesentlichen gleich dem Verhältnis zwischen den in der Serie enthaltenen Reifen und den in der Produktionszeit eingeschlossenen Tagen ist,
- eine Unterteilung der Anzahl der in der Serie enthaltenen Reifen in Lose von Reifen, wobei die in jedem Los enthaltenen Reifen die Anzahl der Reifen nicht überschreiten, die durch eine einzige Vulkanisierform in dem Zeitraum eines Tages erzeugt werden kann,
- die Fertigung der Rohreifen (2) in einem intermittierenden Modus, wobei sich die Fertigung eines Loses von Rohreifen mit der Fertigung anderer Rohreifen mit unterschiedlichen baulichen und abmessungsmäßigen Merkmalen abwechselt und die Anzahl der täglich gefertigten Lose gleich dem Verhältnis zwischen der Anzahl der in jedem Block enthaltenen Reifen und der Anzahl der in jedem Los enthaltenen Reifen ist.

## Revendications

1. Procédé pour la production, sur la même ligne de production, d'une pluralité de pneus (1) lesquels ont des caractéristiques différentes et sont répartis dans au moins deux séries séparées, chaque série comportant des pneus identiques, une série différant de l'autre série par au moins une caractéristique structurelle ou dimensionnelle typique de ladite série de pneus, comportant les étapes de production suivantes:
- fournir aux machines de ladite ligne les outils relatifs ou associés à la production d'une série prédéterminée de pneus (1);
- produire, sur la machine destinée à la préparation d'articles pour ladite ligne (2a, 14, 4, 5, 6, 7), les articles semi-finis nécessaires à la production des pneus (1) appartenant à ladite série prédéterminée;
- assembler, sur les machines de fabrication de ladite ligne, lesdits articles semi-finis (2a, 14, 4, 5, 6, 7) à former autant de pneus bruts (2) que requis pour ladite série;
- vulcaniser des enveloppes de pneus bruts (2) sur les machines de vulcanisation de ladite ligne comportant des presses de vulcanisation, chacune munie d'au moins un moule de vulcanisation, de manière à réaliser les pneus (1) de ladite série prédéterminée;
- répéter les étapes de production de ladite méthode pour chaque série de ladite pluralité de pneus (1),
la méthode étant **caractérisée en ce qu'**elle comporte les étapes de production suivantes, comprenant:
- division du nombre de pneus (1) de chaque série en une pluralité de lots se composant d'un nombre préétabli de pneus, où le nombre des pneus contenus dans le lot est plus petit que le nombre de pneus bruts correspondants (2) qui peut être produit sur ladite ligne en l'espace de 24 heures;
- production de ladite pluralité de pneus (1) en assemblant lesdits pneus bruts en lots successifs, où l'on alterne la fabrication d'un lot de pneus bruts appartenant à une série prédéterminée avec la fabrication d'un autre lot de pneus bruts appartenant à une série différente.

2. Méthode selon la revendication 1, **caractérisée en ce que** le nombre de pneus (1) compris dans chaque lot est déterminé sous forme de rapport entre la limite de temps préfixée d'emmagasinage pour les articles semi-finis et/ou pour les pneus bruts (2) et le temps requis pour l'exécution de l'étape de production la plus lente.

3. Méthode selon la revendication 2, **caractérisée en ce que** la limite de temps maximum préétablie pour l'emmagasinage est de 24 heures.

4. Méthode selon la revendication 2, **caractérisée en ce que** la limite de temps maximum préétablie pour l'emmagasinage est de 8 heures.

5. Méthode selon la revendication 2, **caractérisée en ce que** l'étape de production la plus lente est l'étape de vulcanisation.

6. Méthode selon la revendication 1, **caractérisée en ce que** le nombre des pneus (1) contenus dans un lot se situe entre 30 et 150.

7. Méthode selon la revendication 1, **caractérisée en ce que** l'unité de production pour la vulcanisation vulcanisant un nombre de pneus correspondant à un lot comporte des presses de vulcanisation (330) garnies de moules ayant une dimension identique et un dessin ou modèle différent.

8. Méthode selon la revendication 1, **caractérisée en ce que** l'unité de production pour la vulcanisation vulcanisant un nombre de pneus correspondant à un lot comporte exclusivement des moules différents.

9. Méthode selon la revendication 1, **caractérisée en ce que** les machines de vulcanisation de ladite ligne ne comportent pas de groupes ayant plus de cinq moules identiques.

10. Méthode selon la revendication 9, **caractérisée en ce que** tous les moules compris dans lesdites machines de vulcanisation (320) sont différents les uns des autres.

11. Installation comprenant au moins une ligne de production de pneus, pour la production d'une pluralité de pneus (1) de caractéristiques différentes, répartis dans au moins deux séries séparées, chaque série comportant des pneus identiques, une série différant de l'autre série par au moins une caractéristique structurelle ou dimensionnelle desdits pneus différents, chaque ligne de production comportant des moyens pour la préparation d'articles semi-finis (2a, 14, 4, 5, 6, 7) requis pour la production desdits pneus, des moyens pour l'assemblage réciproque desdits articles semi-finis (120, 130, 140, 210) en vue de composer les pneus bruts (2), et des moyens pour la vulcanisation (310, 320) desdits pneus bruts dans des moules de vulcanisation correspondants, **caractérisée en ce que** lesdits moyens de vulcanisation ne comprennent aucun groupe de cinq ou plus de cinq moules identiques.

12. Installation selon la revendication 11, **caractérisée en ce que** dans chaque ligne de production de pneus lesdits moyens pour l'assemblage réciproque desdits articles semi-finis se composent d'une seule machine pour la fabrication desdits pneus bruts.

13. Installation selon la revendication 12, **caractérisée en ce que** lesdits moyens pour la préparation d'articles semi-finis et lesdits moyens pour la vulcanisation (310, 320) des pneus bruts sont communs à une pluralité de lignes séparées de production de pneus.

14. Installation selon la revendication 12, **caractérisée en ce que** dans chaque ligne de production de pneus les moyens correspondants pour la vulcanisation ne comprennent aucun groupe de plus de deux moules identiques.

15. Installation selon la revendication 11, **caractérisée en ce que** lesdits moyens de vulcanisation comprennent exclusivement des moules différents les uns des autres.

16. Installation selon la revendication 11, **caractérisée en ce que** l'écoulement des matériaux, le contrôle des outils, l'emmagasinage des articles semi-finis et des pneus bruts et le réglage des machines sont pilotés par des systèmes de contrôle automatiques, commandés par ordinateur, pour établir et vérifier automatiquement l'exactitude des outils et des mises en oeuvres ou réglages sur les machines de production, l'alimentation d'éléments composants compatibles pour obtenir des pneus bruts ayant les caractéristiques désirées pour un lot particulier dans le procédé de fabrication et le montage du moule correct à l'endroit de vulcanisation préétabli.

17. Installation selon la revendication 16, **caractérisée en ce que** lesdits systèmes de contrôle automatiques sont obtenus par l'emploi de codes de lots associés aux articles semi-finis et aux pneus bruts, lisibles par des lecteurs de codes.

18. Installation selon la revendication 17, **caractérisée en ce que** lesdits codes de lots sont des codes à barres.

19. Méthode pour minimiser le nombre de moules de vulcanisation requis pour produire une quantité prédéterminée de pneus identiques, comprenant les étapes suivantes:
- préparation des articles semi-finis (2a, 14, 4, 5, 6, 7) nécessaires pour la fabrication de ladite quantité de pneus (1);
- assemblage desdits articles semi-finis (2a, 14, 4, 5, 6, 7) pour la fabrication d'un nombre de pneus bruts (2) correspondant à ladite quantité;
- vulcanisation desdits pneus bruts (2) dans lesdits moules de vulcanisation, pour réaliser les pneus (1) de ladite quantité préétablie;
la méthode étant **caractérisée par**:
- la fabrication desdits pneus bruts (2) de manière intermittente, en alternant la fabrication d'un lot de pneus bruts, le nombre des pneus dudit lot étant inférieur à ladite quantité préétablie, avec la fabrication de pneus bruts pour d'autres lots ayant des caractéristiques structurelles et dimensionnelles différentes, jusqu'à l'épuisement de ladite quantité préétablie,
- la vulcanisation dudit lot de pneus bruts dans un ou plusieurs moules identiques, le nombre desdits moules identiques en fonctionnement simultanément étant plus petit que le nombre des moules nécessaires à vulcaniser, dans un temps préfixé, la quantité de pneus bruts fabriquée dans le même intervalle de temps.

20. Méthode pour la distribution de la production d'une série de pneus identiques les uns aux autres d'un point de vue structural et dimensionnel, dans une période de temps (temps de production) d'une valeur plus haute que la période de temps (temps de fabrication) requise pour la fabrication des pneus bruts correspondants, comprenant les étapes suivantes:
- préparation des articles semi-finis (2a, 14, 4, 5, 6, 7) requis pour la fabrication de ladite séries de pneus (1) ;
- assemblage desdits articles semi-finis (2a, 14, 4, 5, 6, 7) les uns avec les autres pour la fabrication d'un nombre de pneus (2) correspondant à ladite série;
- vulcanisation desdits pneus bruts (2) dans des moules de vulcanisation correspondants, de manière à réaliser des pneus (1) de cette série;
la méthode étant **caractérisée par**:
- la division du nombre de pneus contenus dans cette séries en un groupe de tranches de pneus où les pneus contenus dans chaque tranche sont essentiellement égaux au rapport entre les pneus contenus dans ladite série et les jours compris dans ledit temps de production,
- la division du nombre de pneus contenus dans ladite séries en lots de pneus où les pneus contenus dans chaque lot ne dépassent pas le nombre de pneus qui peuvent être produits par un seul moule de vulcanisation dans l'espace d'un jour,
- la fabrication desdits pneus bruts (2) de manière intermittente, en alternant la fabrication d'un lot de pneus bruts avec la fabrication d'autres pneus bruts de caractéristiques structurales et dimensionnelles différentes, le nombre des lots fabriqués chaque jour étant égal au rapport entre le nombre des pneus contenus dans chaque tranche et le nombre des pneus contenus dans chaque lot.
